# EUROPEAN PATENT APPLICATION

(11) **EP 4 822 881 A1**
(43) Date of publication of application: **14.10.2026**
(21) Application number: 24767981.4
(22) Date of filing: 05.03.2024
(51) Int. Cl.: H01M 50/54, H01M 50/15, H01M 50/59, H01M 50/586, H01M 50/176, H01M 50/531, B23K 26/21

(54) **SECONDARY BATTERY**

(30) Priority: 06.12.2023 KR 20230175380
(71) Applicant: Samsung SDI Co., Ltd., Yongin-si, Gyeonggi-do 17084 (KR)
(72) Inventor: HWANG, Cheol Hee, Yongin-si, Gyeonggi-do 17084 (KR)
(74) Representative: Gulde & Partner
(86) International application number: PCT/KR2024/002794
(87) International publication number: WO 2025/121548

(57) **Abstract**

An embodiment of the present disclosure relates to a secondary battery, and the secondary battery may include: a plurality of electrode assemblies including a plurality of first electrode plates, a plurality of second electrode plates, and a plurality of separators interposed between the first electrode plates and the second electrode plates; a case accommodating the electrode assembly; a plurality of first current collecting plates electrically connected to the first electrode plate; a plurality of second current collecting plates electrically connected to the second electrode plate; and a cap assembly including a first terminal portion and a second terminal portion electrically connected to the first current collecting plates and the second current collecting plates, respectively, and a cap plate coupled to the case.

According to the embodiment of the present disclosure, as a plurality of electrode assemblies and a current collecting plate electrically connected to each electrode assembly are provided, the weldability of the electrode assembly may be improved. Accordingly, a secondary battery having high capacity and high density may be provided.

## Description

### [Technical Field]

An embodiment of the present disclosure relates to a secondary battery capable of realizing high capacity and high density.

### [Background Art]

Secondary batteries are classified into a prismatic type, a cylindrical type, a pouch type, and the like according to a case shape. In the case of the prismatic type secondary battery, a cap assembly is coupled to one or both ends of a rectangular parallelepiped-shaped case, and a wound or stacked type electrode assembly is accommodated therein. In the case of secondary battery mounted on an electric vehicle, high capacity is essential for long distance travel. Accordingly, various methods have been attempted to develop high capacity and high density secondary batteries.

The wound type electrode assembly can increase the capacity of the secondary battery by increasing the number of times that an electrode is wound. However, as the number of times that the electrode is wound increases, there is a risk of cracks occurring in an electrode plate in a rounded portion of the electrode assembly.

The stacked type electrode assembly can increase the capacity of the secondary battery by increasing the number of stacked electrodes with a separator interposed between a positive electrode and a negative electrode. However, as the number of stacked electrodes increases, the number of electrode tabs also increases. As the number of electrode tabs increases, a welding rate with a current collector decreases, so there is a limit to increasing the capacity of the secondary battery. Accordingly, a new structure capable of solving these problems and increasing the capacity of secondary battery is required.

The above-described information disclosed in the background technology of this invention is only for improving understanding of the background of the present disclosure, and accordingly, can include information which does not constitute the related art.

### [Disclosure]

### [Technical Problem]

An embodiment of the present disclosure provides a secondary battery capable of realizing high capacity and high density.

### [Technical Solution]

A secondary battery according to an embodiment of the present disclosure may include: a plurality of electrode assemblies including a plurality of first electrode plates, a plurality of second electrode plates, and a plurality of separators interposed between the first electrode plates and the second electrode plates; a case accommodating the electrode assembly; a plurality of first current collecting plates electrically connected to the first electrode plates; a plurality of second current collecting plates electrically connected to the second electrode plates; and a cap assembly including a first terminal portion and a second terminal portion electrically connected to the first current collecting plates and the second current collecting plates, respectively, and a cap plate coupled to the case.

The case may have a rectangular parallelepiped shape.

The electrode assembly may have a rectangular parallelepiped shape, and may have a stack form in which the first electrode plate, the separator, and the second electrode plate are stacked.

The electrode assembly may be disposed so that long side surfaces may face each other.

The separator may be disposed at the outermost portion of the electrode assembly.

An insulating tape may be attached to the outermost portion of the electrode assembly.

Each of the first current collecting plates and the second current collecting plates may be provided in a number corresponding to the number of the electrode assemblies.

Each of the first electrode plates may include a pair of first substrate tabs spaced apart from each other.

Each of the second electrode plates may include a pair of second substrate tabs spaced apart from each other.

The first substrate tabs may be disposed at one end in a longitudinal direction of the electrode assembly.

The second substrate tabs may be disposed at the other end in the longitudinal direction of the electrode assembly.

The first current collecting plate may be welded to the first substrate tab, and the second current collecting plate may be welded to the second substrate tab.

The first current collecting plate and the second current collecting plate may be welded by laser welding.

The first current collecting plate and the second current collecting plate may include a first plate surface and a second plate surface protruding toward the electrode assembly, respectively, and a connection portion connecting the first plate surface and the second plate surface between the first plate surface and the second plate surface and protrude toward the case.

In the first current collecting plate, the first plate surface may be welded to an upper substrate tab among the first substrate tabs, and the second plate surface may be welded to a lower substrate tab among the first substrate tabs.

In the second current collecting plate, the first plate surface may be welded to an upper substrate tab among the second substrate tabs, and the second plate surface may be welded to a lower substrate tab among the second substrate tabs.

Welding grooves may be concavely provided in the first plate surface and the second plate surface.

The welding groove of the first current collecting plate may be disposed toward the first substrate tab, and the welding groove of the second current collecting plate may be disposed toward the second substrate tab.

The first substrate tab may be welded in a state of being inserted into the welding groove of the first current collecting plate, and the second substrate tab may be welded in a state of being inserted into the welding groove of the second current collecting plate.

The welding groove may be disposed toward the case.

Each of the first terminal portion and the second terminal portion may be provided as one.

### [Advantageous Effects]

According to the embodiment of the present disclosure, as the plurality of electrode assemblies and the current collecting plate electrically connected to each electrode assembly are provided, the weldability of the electrode assembly may be improved. Accordingly, a secondary battery having high capacity and high density may be provided.

### [Description of Drawings]

FIG. 1 is a perspective view illustrating a secondary battery according to one embodiment of the present disclosure.
FIG. 2 is a perspective view illustrating an electrode assembly and a current collecting plate according to one embodiment of the present disclosure.
FIG. 3 is a perspective view illustrating the electrode assembly according to one embodiment of the present disclosure.
FIG. 4 is a perspective view illustrating the current collecting plate according to one embodiment of the present disclosure.
FIG. 5 is a side view of the current collecting plate according to FIG. 4.

### [Best mode for carrying out the invention]

Examples of the present disclosure are provided to more completely explain the present disclosure to those skilled in the art, and the following examples may be modified into various other forms. The present disclosure, however, may be embodied in many different forms and should not be construed as being limited to the exemplary embodiments set forth herein. Rather, these exemplary embodiments are provided so that this disclosure will be thorough and complete and will convey the aspects and features of the present disclosure to those skilled in the art.

Further, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used in the present specification is for the purpose of describing particular embodiments only and is not intended to limit the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, components, and/or groups thereof, but do not preclude the presence or addition of one or more other features, numbers, steps, operations, elements, components, and/or groups thereof.

It will be understood that, although the terms first, second, etc. may be used in the present specification to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be called a second member, a second element, a second region, a second layer and/or a second section without departing from the teachings of the present disclosure.

Spatially relative terms, such as "beneath," "below," "lower," "above," "upper," and the like, may be used for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, a secondary battery according to an embodiment of the present disclosure will be briefly described with reference to the accompanying drawings

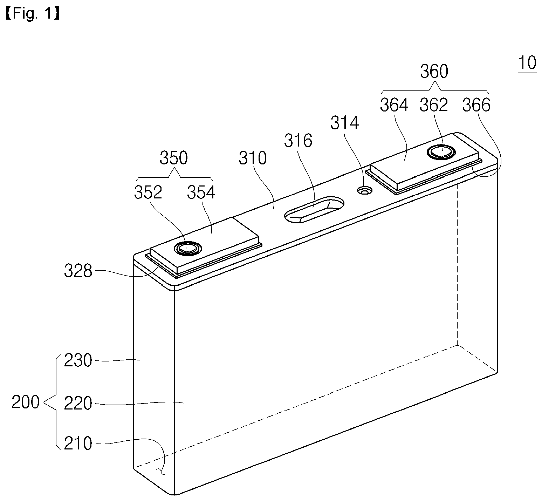

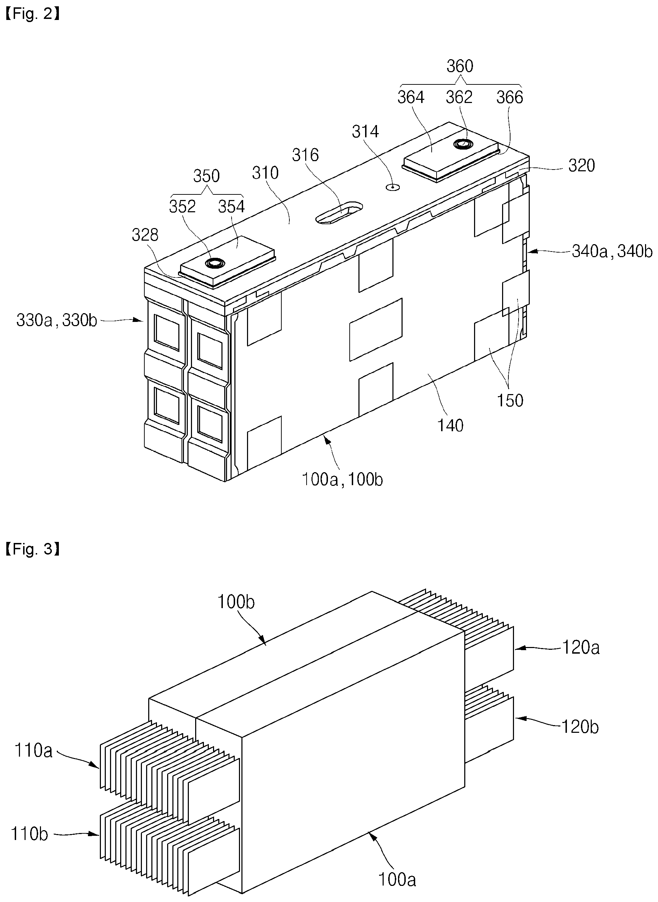

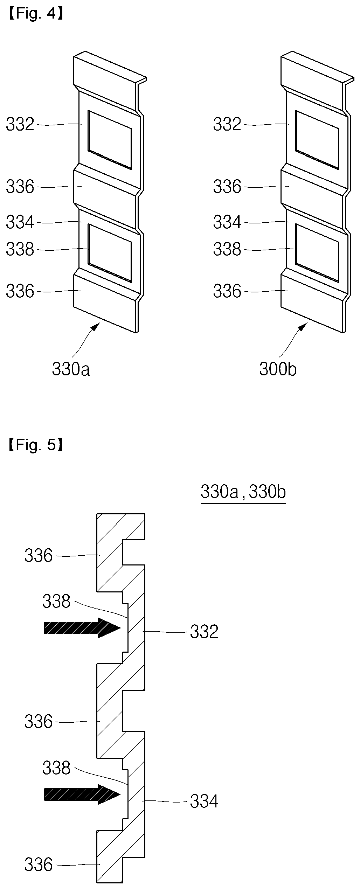

FIG. 1 is a perspective view illustrating a secondary battery according to one embodiment of the present disclosure. FIG. 2 is a perspective view illustrating an electrode assembly and a current collecting plate according to one embodiment of the present disclosure. FIG. 3 is a perspective view illustrating the electrode assembly according to one embodiment of the present disclosure. FIG. 4 is a perspective view illustrating the current collecting plate according to one embodiment of the present disclosure. FIG. 5 is a side view of the current collecting plate according to FIG. 4.

Referring to FIGS. 1 to 3, a secondary battery 10 according to one embodiment of the present disclosure may include a pair of electrode assemblies 100a and 100b, a case 200 which accommodates the electrode assemblies 100a and 100b, and a cap assembly 300 coupled to the case 200. For example, the secondary battery 10 may be a prismatic type battery in which the case 200 has a rectangular parallelepiped shape.

Referring to FIGS. 2 and 3, the electrode assemblies 100a and 100b may be provided as a pair. The electrode assemblies 100a and 100b have the same structure. The electrode assemblies 100a and 100b have a rectangular parallelepiped shape. One electrode assembly 100a or 100b is arranged so that a relatively wide plate surface thereof faces a relatively wide plate surface of the other electrode assembly 100a or 100b. The pair of electrode assemblies 100a and 100b may be provided so as to be insulated even when in contact with each other.

The electrode assemblies 100a and 100b have a form in which a plurality of unit stacks, each composed of thin plate-shaped or film-shaped first and second electrode plates and a separator interposed therebetween, are stacked. The electrode assemblies 100a and 100b may be disposed so that long side surfaces of the plurality of unit stacks are in contact with each other. A sheet 140 of an insulating material may be attached to the outside of the electrode assemblies 100a and 100b by an insulating tape 150 for insulation from the case 200. For example, the first electrode plate may be a negative electrode and the second electrode plate may be a positive electrode. Alternatively, the opposite is also possible.

When the first electrode plate is a negative electrode plate, the first electrode plate may be formed by applying a first electrode active material such as graphite, carbon, a mixture of graphite and silicon (Si) or the like on a first electrode current collector provided as a metal foil of copper, a copper alloy, nickel, or a nickel alloy. A first uncoated portion, which is a region where the first electrode active material is not applied, may be formed on the first electrode plate. The first uncoated portion may be cut into a predetermined shape to make first substrate tabs 110a and 110b. A plurality of first substrate tabs 110a and 110b may be bent to one side and welded to first current collecting plates 330a and 330b. The first current collecting plates 330a and 330b may be electrically connected to the cap assembly 300. Since the electrode assemblies 100a and 100b are provided as a pair, the first substrate tabs 110a and 110b of each electrode assembly 100a and 100b may be disposed in the same direction. Further, since the electrode assemblies 100a and 100b are provided as a pair, the first current collecting plates 330a and 330b may also be provided as a pair. For example, the first substrate tabs 110a and 110b may be composed of two groups. That is, two first substrate tabs 110a and 110b may be provided for each sheet of first electrode plate. The two first substrate tabs 110a and 110b may be spaced apart from each other at a predetermined interval. Accordingly, when the plurality of first electrode plates are stacked, the electrode assemblies 100a and 100b have two groups of the first substrate tabs 110a and 110b spaced apart from each other as shown in FIG. 3. The two groups of the first substrate tabs 110a and 110b are disposed at one side in a longitudinal direction of the electrode assemblies 100a and 100b. For convenience, in FIG. 3, the first substrate tab group 110a at an upper portion is referred to as a first upper group, and the first substrate tab group 110b at a lower portion is referred to as a first lower group.

When the second electrode plate is a positive electrode plate, the second electrode plate may be formed by applying a second electrode active material such as a transition metal oxide such as lithium cobalt oxide (LCO), nickel cobalt manganese (NCM), nickel cobalt aluminum (NCA), lithium iron phosphate (LFP), cobalt-free lithium nickel manganese (NMₓ), or the like on a second electrode current collector provided as a metal foil of aluminum or an aluminum alloy. A second uncoated portion, which is a region where the second electrode active material is not applied, may be formed on the second electrode plate. The second uncoated portion may be cut into a predetermined shape to make second substrate tabs 120a and 120b. A plurality of second substrate tabs 120a and 120b may be bent to one side and welded to second current collecting plates 340a and 340b. The second current collecting plates 340a and 340b may be electrically connected to the cap assembly 300. Since the electrode assemblies 100a and 100b are provided as a pair, the second substrate tabs 120a and 120b of each electrode assembly 100a and 100b may be disposed in the same direction. Further, since the electrode assemblies 100a and 100b are provided as a pair, the second current collecting plates 340a and 340b may also be provided as a pair. For example, the second substrate tabs 120a and 120b may be composed of two groups. That is, two second substrate tabs 120a and 120b may be provided for each sheet of second electrode plate. The two second substrate tabs 120a and 120b may be spaced apart from each other at a predetermined interval. Accordingly, when the plurality of second electrode plates are stacked, the electrode assemblies 100a and 100b have two groups of the second substrate tabs 120a and 120b spaced apart from each other as shown in FIG. 3. The two groups of the second substrate tabs 120a and 120b are disposed at one side in a longitudinal direction of the electrode assemblies 100a and 100b. Here, a disposition direction of the second substrate tabs 120a and 120b is opposite a disposition direction of the first substrate tabs 110a and 110b. For convenience, in FIG. 3, the second substrate tab group 120a at an upper portion is referred to as a second upper group, and the second substrate tab group 120b at a lower portion is referred to as a second lower group.

The separator is disposed between the first electrode plate and the second electrode plate to prevent a short circuit and enable the movement of lithium ions. For example, the separator may include polyethylene, polypropylene, or a composite film of polyethylene and polypropylene. However, the separator is not limited to the above-described materials.

The electrode assemblies 100a and 100b of the above-described structure may be accommodated in the case 200 together with an electrolyte. In some manufacturing processes of the secondary battery 10, the electrode assemblies 100a and 100b are inserted into the case 200 (this will be described later). In some examples, in the electrolyte, a lithium salt such as LiPF₆ or LiBF₄ may be included in an organic solvent such as ethylene carbonate (EC), propylene carbonate (PC), diethyl carbonate (DEC), ethyl methyl carbonate (EMC), or dimethyl carbonate (DMC). Further, the electrolyte may be a liquid or gel. In some examples, when an inorganic solid electrolyte is used, the electrolyte may be omitted.

Referring to FIG. 1, the case 200 has an approximately rectangular parallelepiped box shape, and an upper portion may be open in the longitudinal direction, and an accommodation space may be formed therein. The electrode assemblies 100a and 100b and the electrolyte may be accommodated in the case 200 through the open upper portion. Some components of the cap assembly 300 may be exposed to the outside of the case 200, and some components may be accommodated in the case 200. The case 200 may be composed of a rectangular bottom surface 210 and four side surfaces connected to the bottom surface 210. Among the side surfaces, a surface having a relatively large area is defined as a long side portion 220, and a surface having a relatively small area is defined as a short side portion 230. For example, the electrode assemblies 100a and 100b may be disposed so that plate surfaces face the long side portion 220. In a state in which the electrode assemblies 100a and 100b are accommodated in the case 200, the cap assembly 300 is coupled to the case 200 and electrically connected to the electrode assemblies 100a and 100b.

Referring to FIGS. 2, 4, and 5, the cap assembly 300 may include a cap plate 310 coupled to the case 200, a plurality of insulating members, first current collecting plates 330a and 330b, second current collecting plates 340a and 340b, and a first terminal portion 350, and a second terminal portion 360.

Referring to FIGS. 1 and 2, the cap plate 310 has an approximately rectangular plate shape and may be formed of the same material as the case 200. In the cap plate 310, each terminal hole for coupling with the first terminal portion 350 and the second terminal portion 360, a liquid injection hole 314, a vent hole for coupling with a vent 316, and the like may be formed. In order to insulate the cap plate 310 and the electrode assemblies 100a and 100b, a plurality of insulating members not shown in the drawings such as insulating plates 320 may be provided.

Referring to FIGS. 4 and 5, the first current collecting plates 330a and 330b electrically connect the first electrode plate, which is a negative electrode plate, and the first terminal portion 350. To this end, the first current collecting plates 330a and 330b may be made of the same material as the first electrode plate. For example, the first current collecting plates 330a and 330b may be electrically connected to the first substrate tabs 110a and 110b of the first electrode plate through laser welding. For welding, the first substrate tabs 110a and 110b may be gathered to one side and welding may be performed by placing the first current collecting plates 330a and 330b on the first substrate tabs 110a and 110b. The first current collecting plates 330a and 330b are provided as a pair.

The first current collecting plates 330a and 330b should be electrically connected to the two electrode assemblies 100a and 100b, respectively, and thus are provided as a pair. The pair of first current collecting plates 330a and 330b have the same structure. One first current collecting plate 330a or 330b may be disposed side by side the other first current collecting plate 330a or 330b. That is, the pair of first current collecting plates 330a and 330b may be disposed on the same line. However, the pair of first current collecting plates 330a and 330b may be spaced apart from each other so as not to be in contact.

The first current collecting plates 330a and 330b may have an approximately rectangular plate shape when viewed from the front. The first current collecting plates 330a and 330b may be made by bending a rectangular plate several times. Each of the first current collecting plates 330a and 330b may include a first plate surface 332 electrically connected to one of a first substrate tab group (110a in FIG. 3), a second plate surface 334 electrically connected to another one of the first substrate tab group (110b in FIG. 3), and a connection portion 336 disposed between the first plate surface 332 and the second plate surface 334. The connection portion 336 may be provided not only between the first plate surface 332 and the second plate surface 334 but also at one end of the first plate surface 332 and one end of the second plate surface 334. A welding groove 338 for welding to the first substrate tab may be provided in each of the first plate surface 332 and the second plate surface 334.

The first plate surface 332 may be electrically connected to the upper first substrate tab (a first upper group, 110a in FIG. 3) based on FIG. 3. The second plate surface 334 may be electrically connected to the lower first substrate tab (a first lower group, 110b in FIG. 3) based on FIG. 3. Since the groups of first substrate tabs 110a and 110b of the electrode assemblies 100a and 100b are spaced apart from each other, the first plate surface 332 and the second plate surface 334 are also disposed to be spaced apart from each other. To this end, the first plate surface 332 and the second plate surface 334 are perpendicular to the cap plate 310 and the connection portion 336 is provided between the first plate surface 332 and the second plate surface 334 to connect the first plate surface 332 and the second plate surface 334.

The connection portion 336 is provided to be stepped from the first plate surface 332 and the second plate surface 334. The connection portion 336 is a portion corresponding to a position between the groups of first substrate tabs 110a and 110b. The connection portion 336 protrudes in a direction away from the electrode assemblies 100a and 100b so as not to be in contact with the first substrate tabs 110a and 110b or the electrode assemblies 100a and 100b. That is, the connection portion 336 protrudes toward the short side portion 230 of the case 200. The connection portion 336 may be provided in a 'C' shape when viewed from the side. Based on the connection portion 336, the first plate surface 332 is connected to an upper side, and the second plate surface 334 is connected to a lower side. Further, the connection portion 336 may be provided at each of an upper end of the first plate surface 332 and a lower end of the second plate surface 334. The upper connection portion 336 of the first plate surface 332 may have the same shape as the central connection portion. An end portion of the upper connection portion 336 may be electrically connected to the first terminal portion 350 by a conductive plate or the like not shown in the drawing. The lower connection portion 336 of the second plate surface 334 may have a shape vertically bent from the second plate surface 334 and then vertically bent again in a downward direction to prevent contact with the lower first substrate tab group 110b. That is, an end portion of the lower connection portion 336 of the second plate surface 334 extends parallel to the first plate surface 332 or the second plate surface 334. Accordingly, when the first current collecting plates 330a and 330b are viewed from the side, it can be seen that the first plate surface 332 and the second plate surface 334 protrude toward the electrode assemblies 100a and 100b, and the connection portion 336 protrudes toward the short side portion 230 of the case 200 (see FIG. 5).

Meanwhile, the welding grooves 338 may be provided in the first plate surface 332 and the second plate surface 334. The welding groove 338 is a groove concavely formed toward the electrode assemblies 100a and 100b from the first plate surface 332 and the second plate surface 334 facing the short side portion 230 of the case 200. Although the welding groove 338 is shown in a quadrangular shape in FIG 4, the welding groove 338 is not limited to the illustrated shape. When the first current collecting plates 330a and 330b and the first substrate tabs 110a and 110b are welded, welding is performed in a direction (arrow direction in FIG. 5) toward the first substrate tabs 110a and 110b from the welding groove 338. A region where the welding groove 338 is provided has a thinner thickness than other regions. Accordingly, the welding groove 338 may improve adhesion to the first substrate tabs 110a and 110b and shorten a welding time. Alternatively, although not shown in the drawings, the welding groove 338 may be provided in a direction of the first substrate tabs. In this case, the welding groove 338 may serve to temporarily fix the first substrate tabs 110a and 110b before welding.

The second current collecting plates 340a and 340b are disposed to be symmetrical to the first current collecting plates 330a and 330b and are electrically connected to the second electrode plate 120. To this end, the second current collecting plates 340a and 340b may be made of the same material as the second substrate tabs 120a and 120b of the second electrode plate 120. The second substrate tabs 120a and 120b may be gathered to one side for welding, and then the second current collecting plates 340a and 340b may be placed on the second substrate tabs 120a and 120b to perform the welding. Since the second current collecting plates 340a and 340b have the same number and structure as the first current collecting plates 330a and 330b, detailed descriptions will be omitted.

As described above, a structure in which the first current collecting plates 330a and 330b and the second current collecting plates 340a and 340b have plate surfaces protruding toward the case 200, and the substrate tabs 110a, 110b, 120a, and 120b are surface-to-surface laser welded to the protruding plate surfaces may be defined as laser plate welding (LPW).

The first terminal portion 350 may include a first terminal pin 352 and a first terminal plate 354. The first terminal plate 354 may be insulated from the cap plate 310 by an insulating member 328. The first terminal pin 352 is electrically connected to the first current collecting plates 330a and 330b, and thus is electrically connected to the first electrode plates 110 of the electrode assemblies 100a and 100b. Even when a plurality of first current collecting plates 330a and 330b are provided, only one first terminal portion 350 is provided.

The second terminal portion 360 may include a second terminal pin 362, a second terminal plate 364, and a conductive plate 366. The second terminal portion 360 is disposed to be symmetrical to the first terminal portion 350. The conductive plate 366 electrically connects the second terminal plate 364, which is electrically connected to the second terminal pin 362, and the cap plate 310. Accordingly, the cap plate 310 is connected to the second current collecting plates 340a and 340b through the second terminal portion 360 and thus may be electrically connected to the second electrode plate 120. Accordingly, the cap plate 310 has the same positive polarity as the second current collecting plates 340a and 340b, and the case 200 welded to the cap plate 310 also has the positive polarity. Even when the plurality of second current collecting plates 340a and 340b are provided, the second terminal portion 360 is provided as one.

In the above-described embodiment, an embodiment in which two electrode assemblies are provided and two corresponding first current collecting plates and second current collecting plates are also provided was described. However, the number of electrode assemblies and the number of current collecting plates may be changed according to a size of the case or a target capacity of the secondary battery. When the case is sufficiently large, a plurality of electrode assemblies may be provided. The number of first and second current collecting plates may also be provided to correspond to the number of electrode assemblies.

As described above, according to the embodiment of the present disclosure, as the plurality of electrode assemblies and the current collecting plate electrically connected to each electrode assembly are provided, the weldability of the electrode assembly may be improved. Accordingly, a secondary battery having high capacity and high density may be provided.

The above-descriptions are only one embodiment for implementing the present disclosure, and the present disclosure is not limited to the above-described embodiment, and as claimed in the following claims, the technical spirit of the present disclosure will be considered to the extent that various modifications can be made by anyone skilled in the art without departing from the gist of the present disclosure.

## Claims

1. A secondary battery comprising:
a plurality of electrode assemblies including a plurality of first electrode plates, a plurality of second electrode plates, and a plurality of separators interposed between the first electrode plates and the second electrode plates;
a case accommodating the electrode assembly;
a plurality of first current collecting plates electrically connected to the first electrode plates;
a plurality of second current collecting plates electrically connected to the second electrode plates; and
a cap assembly including a first terminal portion and a second terminal portion electrically connected to the first current collecting plates and the second current collecting plates, respectively, and a cap plate coupled to the case.

2. The secondary battery of claim 1, wherein the electrode assembly has a rectangular parallelepiped shape, and has a stack form in which the first electrode plate, the separator, and the second electrode plate are stacked.

3. The secondary battery of claim 2, wherein the electrode assembly is disposed so that long side surfaces face each other.

4. The secondary battery of claim 3, wherein the separator is disposed at the outermost portion of the electrode assembly.

5. The secondary battery of claim 3, wherein an insulating tape is attached to the outermost portion of the electrode assembly.

6. The secondary battery of claim 3, wherein each of the first current collecting plates and the second current collecting plates is provided in a number corresponding to the number of electrode assemblies.

7. The secondary battery of claim 6, wherein each of the first electrode plates includes a pair of first substrate tabs spaced apart from each other.

8. The secondary battery of claim 7, wherein each of the second electrode plates includes a pair of second substrate tabs spaced apart from each other.

9. The secondary battery of claim 8, wherein the first substrate tabs are disposed at one end in a longitudinal direction of the electrode assembly.

10. The secondary battery of claim 9, wherein the second substrate tabs are disposed at the other end in the longitudinal direction of the electrode assembly.

11. The secondary battery of claim 10, wherein:
the first current collecting plate is welded to the first substrate tab; and
the second current collecting plate is welded to the second substrate tab.

12. The secondary battery of claim 11, wherein the first current collecting plate and the second current collecting plate are welded by laser welding.

13. The secondary battery of claim 12, wherein the first current collecting plate and the second current collecting plate include a first plate surface and a second plate surface protruding toward the electrode assembly, respectively, and a connection portion connecting the first plate surface and the second plate surface between the first plate surface and the second plate surface and protrude toward the case.

14. The secondary battery of claim 13, wherein, in the first current collecting plate:
the first plate surface is welded to an upper substrate tab among the first substrate tabs; and
the second plate surface is welded to a lower substrate tab among the first substrate tabs.

15. The secondary battery of claim 14, wherein, in the second current collecting plate:
the first plate surface is welded to an upper substrate tab among the second substrate tabs; and
the second plate surface is welded to a lower substrate tab among the second substrate tabs.

16. The secondary battery of claim 14 or 15, wherein welding grooves are concavely provided in the first plate surface and the second plate surface.

17. The secondary battery of claim 16, wherein:
the welding groove of the first current collecting plate is disposed toward the first substrate tab; and
the welding groove of the second current collecting plate is disposed toward the second substrate tab.

18. The secondary battery of claim 17, wherein:
the first substrate tab is welded in a state of being inserted into the welding groove of the first current collecting plate; and
the second substrate tab is welded in a state of being inserted into the welding groove of the second current collecting plate.

19. The secondary battery of claim 16, wherein the welding groove is disposed toward the case.

20. The secondary battery of claim 7, wherein each of the first terminal portion and the second terminal portion is provided as one.
